# EUROPEAN PATENT SPECIFICATION

(11) **EP 2 502 968 B1**
(45) Date of publication and mention of the grant of the patent: **08.10.2014**
(21) Application number: 11159787.8
(22) Date of filing: 25.03.2011
(51) Int. Cl.: C09D 11/16, C09D 13/00

(54) **Transparent solid ink composition and method of preparing the same**
Transparente Festtintenzusammensetzung und Herstellungsverfahren dafür
Composition d'encre solide transparente et son procédé de préparation

(43) Date of publication of application: 26.09.2012
(73) Proprietor: Yang, See-Young, Jeongwang-dong, Siheung-si Gyeonggi-do (KR); Young-Ok, Kim, Gyeonggi-do (KR); Im, Hoe-Jae, Gyeonggi-do (KR); Yoo, Il-Sun, Neung-dong, Hwaseong-si Gyeonggi-do (KR)
(72) Inventor: Yang, See-Young, Gyeonggi-do (KR); Kim, Young-Ok, Gyeonggi-do (KR)
(74) Representative: advotec.

(56) References cited:
- US-A- 6 033 464
- US-A1- 2009 293 767
- US-A1- 2010 196 287

## Description

### BACKGROUND OF THE INVENTION

### 1. Technical Field

The present invention relates to a transparent solid ink composition and a method of preparing the same, and, more particularly, to a transparent solid ink composition having excellent transparency, writing convenience and stability and a method of preparing the same.

### 2. Description of the Related Art

Generally, pens for office work are classified into pens for writing and pens for underlining or highlighting.

Many kinds of pens for underlining or highlighting have already been introduced in the market, and are commonly used. Further, most pens for underlining or highlighting are pens using aqueous ink containing dye and pigment.

However, such pens for underlining or highlighting have several problems. That is, they are problematic in that they cannot be easily preserved because aqueous ink is easily dried and volatilized, and it is inconvenient to use in subjects output by using aqueous ink, which has recently been required and used frequently.

Aqueous ink is problematic in that it easily dries due to the compactness and dimension stability of writing instruments and such writing instruments are inconvenient to use due to the drying of aqueous ink at the time of opening the writing instruments. Further, even in the subjects output by applying aqueous ink using an inkjet printer, there is a problem in that colors are eluted and spread by the same kind of solvents used during marking work.

In order to solve the above problems, Korean Patent Publication No. 10-2009-0123631 discloses an ink composition comprising: 10 ∼ 70 wt% of a gel former which is made of an alkali metal salt or ammonium salt of aliphatic carboxylic acid of 8 ∼ 36 carbon atoms; 2 ∼ 30 wt% of a clearing agent; 2 ∼ 30 wt% of a subsidiary clearing agent; 1 ∼ 30 wt% of hydrogenated glucose, 0.1 ∼ 10 wt% of a dye; and 2 ∼ 30 wt% of oil.

The above-mentioned conventional problems have been mostly overcome by the technology disclosed in Korean Patent Publication No. 10-2009-0123631. However, in this technology, triethanolamine is used as a clearing agent, and this triethaonlamine is known to be a stimulative for delicate skin.

In addition, the ink composition disclosed in Korean Patent Publication No. 10-2009-0123631 is problematic in that it has insufficient strength and transparency and in that its residue adheres to the surface of paper to some degree after writing.

### SUMMARY OF THE INVENTION

Accordingly, the present invention has been devised to solve the above-mentioned conventional problems, and an object of the present invention is to provide a novel solid ink composition, which can realize vivid colors, which can improve stability and transparency without using aliphatic amino alcohol as a clearing agent, which can be smoothly applied onto paper during writing and whose residue does not adhere to the surface of paper after writing, and a method of preparing the same.

In order to accomplish the above object, an aspect of the present invention provides a method of preparing a solid ink composition, comprising the steps of: reacting 15 ∼ 25 parts by weight of base oil including coconut oil, palm oil and castor oil and 40 ∼ 60 parts by weight of aliphatic organic acid of 10 to 20 carbon atoms with 7 ∼ 15 parts by weight of a caustic soda solution (concentration: 40%) to saponify the base oil and to change the aliphatic organic acid into sodium salt thereof; mixing 3 ∼ 10 by weight of glycerin, 10 ∼ 20 by weight of ethanol, 0.1 ∼ 1.0 by weight of a dye and 1 ∼ 10 by weight of silica with the reaction product and then melting the mixture at 70 ∼ 80°C; and cooling the molten mixture.

Another aspect of the present invention provides a solid ink composition, prepared by the method of claim, wherein the solid ink composition comprises a saponifying agent as a solid component.

### DESCRIPTION OF THE PREFERRED EMBODIMENTS

Hereinafter, the present invention will be described in detail.

The present invention provides a method of preparing a solid ink composition, comprising the steps of: reacting 15 ∼ 25 parts by weight of base oil including coconut oil, palm oil and castor oil and 40 ∼ 60 parts by weight of aliphatic organic acid of 10 to 20 carbon atoms with 7 ∼ 15 parts by weight of a caustic soda solution (concentration: 40%) to saponify the base oil and to change the aliphatic organic acid into sodium salt thereof; mixing 3 ∼ 10 by weight of glycerin, 10 ∼ 20 by weight of ethanol, 0.1 ∼ 1.0 by weight of a dye and 1 ∼ 10 by weight of silica with the reaction product and then melting the mixture at 70 ∼ 80°C; and cooling the molten mixture.

The base oil used in the present invention comes into contact with caustic soda to cause saponification. Examples of the base oil may include coconut oil, palm oil, castor oil, and the like. They may be used independently or as a mixture of two or more.

The aliphatic organic acid used in the present invention may be aliphatic organic acid having a carbon number of 10 ∼ 20. When the carbon number of the aliphatic organic acid is less than 10, the solid ink composition cannot exhibit suitable strength. Further, when the carbon number thereof is more than 20, the transparency of the solid ink composition deteriorates, and the hardness of the solid ink composition excessively increases. Examples of the aliphatic organic acid may include stearic acid, laurylic acid, palmitic acid, myristic acid, hyaluronic acid, and the like. They may also be used independently or as a mixture of two or more.

The ratio of base oil to aliphatic organic acid may be 15∼25: 40∼60 by weight. When base oil deviates from the range, curing time after the reaction excessively increases. When aliphatic organic acid deviates from the range, the transparency of the solid ink composition deteriorates, and the solid ink composition cannot be easily applied onto paper.

After the saponification reaction, glycerin is obtained as a side product. This glycerin naturally mixes with sodium salt of aliphatic organic acid, thus serving as a clearing agent for increasing transparency.

Thereafter, 3 ∼ 10 by weight of glycerin, 10 ∼ 20 by weight of ethanol, 0.1 ∼ 1.0 by weight of a dye and 1 ∼ 10 by weight of silica are mixed with the reaction product, and then the mixture is melted at 70 ∼ 80°C and then cooled to obtain the solid ink composition of the present invention.

The ethanol acts as a clearing agent for increasing transparency together with glycerin, and it is preferred that its concentration be 95% or more. The silica serves to prevent the solid ink composition from spreading on paper. Fumed silica, liquid silica or the like can be used as the silica.

The dyes for providing colors, used in the present invention, may be water-soluble dyes or water-soluble fluorescent dyes. The reason for this is because these dyes are easily mixed with other components. Examples of these dyes include Acid Red 4, Acid Red 52, Acid Red 87, Acid Red 91, Acid Red 92, Acid Red 98, Acid Red 388, Acid Orange 14, Acid Orange 87, Acid Yellow 7, Acid Yellow 73, Acid Blue 9, Basic Red 1, Basic Red 59, Basic Violet 10, Basic Yellow 40, Basic Violet 11, Basic Violet 16, Oil-soluble dye Green 7, Edible dye Green 8, Edible dye Red 104, Edible dye Yellow 7, Edible dye Yellow 8, and the like.

In order to further increase transparency, 3 ∼ 10 parts by weight of sugars may be added as a subsidiary clearing agent. Examples of the sugars may include saccharide, starch syrup, sorbitol, maltitol, maltotriitol, lactitol, xylitol, mannitol, isomalt, maltitol syrup, polyglycitol syrup, and the like.

Hereinafter, the present invention will be described in more detail with reference to the following Examples. However, these Examples are set forth to illustrate the present invention, and the scope of the present invention is not limited thereto.

### [Example 1]

20 g of base oil including 10 g of coconut, 5 g of palm oil and 5 g of castor oil and 50 g of aliphatic organic acid including 30 g of stearic acid, 2 g of laurylic acid, 10 g of palmitic acid, 3 g of myristic acid and 5 g of hyaluronic acid were put into a reactor and then melted at 70∼75°C. Subsequently, 10 g of a 40% caustic soda solution was slowly added to the molten reactant and then slowly stirred for 2 hours unidirectionally. In this case, the temperature of the reactor was maintained at 70∼75°C to saponify the base oil and to make the aliphatic organic acid into sodium salt thereof.

Thereafter, 0.5 g of Edible dye Green 8 and 5 g of fumed silica (CAB-O-SIL, manufactured by CABOT CO., Ltd.) were mixed with 5 g of glycerin and 15 g of ethanol to form a mixed solution, and then the mixed solution was slowly added to the reaction solution to color the reaction solution. Subsequently, the temperature of the reactor was increased to 70∼75°C again to completely mix and melt them together, thereby obtaining a solid ink composition in the form of wax.

The solid ink composition was molded into a writing instrument. The physical properties of the obtained writing instrument were valuated, and the results thereof are given in Table 1.

### [Example 2]

Example 2 was conducted in the same manner as Example 1, except that 5 g of liquid silica (colloidal sol SS-SOL 30E, manufactured by S-CHEMTECH CO., Ltd.) was used instead of fumed silica.

### [Comparative Example 1]

19.5 g of sodium stearate, 10 g of sodium laurylate, 10 g of sodium myristate, 10 g of triethanolamine, 10 g of glycerin, 20 g of hydrogenated glucose (PO-40), 20 g of fluidized paraffin and 0.5 g of Basic Red 1 were put into a stirrer and were then stirred for 1 hour at 90 °C. Then, the molten mixture was molded, cooled and then solidified to obtain a pink solid ink composition.

The solid ink compositions were cooled and solidified to be formed into writing instruments, and then these writing instruments were compared with each other by using them for writing.
* Transparency test: the transparencies of samples, obtaining by putting liquid ink compositions into a mold having a width of 1 cm, a length of 1 cm and a height of 3 cm and then cooling and solidifying the liquid ink compositions, were compared with each other by the naked eye.
* Spreadability test: first, writing was conducted on copying paper using oily or aqueous ink, and then further writing was conducted at the same pressure twice using the writing instruments obtained in Examples 1 and 2 and Comparative Example 1. Then, the written copying paper was left in an oven at 40°C for 1 day, and then the spreadability on the copying paper was observed.
* The solid ink compositions were applied onto copying paper at the same distance (10 cm) and the same pressure reciprocally four times, and then residues on the copying paper were observed by naked eye.

**[Table 1]**

| Evaluation | Example 1 | Example 2 | Comparative Example 1 |
|---|---|---|---|
| Writing easiness | ⊚ | ⊚ | ○ |
| Transparency | ⊚ | ⊚ | ○ |
| Spreadability | ⊚ | ○ | ⊚ |
| Nonadherend after writing (residue) | ⊚ | ⊚ | ○ |

| | | | |
|---|---|---|---|
| * Notes: ⊚:excellent, ○: good | | | |

As described above, the solid ink composition of the present invention is very transparent compared to conventional ink compositions, and has excellent miscibility and stability because it is easily mixed with a water-soluble dye or a water-soluble fluorescent dye. Further, the solid ink composition does not blur on the subject output by an ink-jet printer using aqueous ink, and has excellent brightness. Furthermore, the solid ink composition can be formed into various types of products, such as colored pencils, pastel crayons, lipsticks, pencils and the like, depending on its purposes.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of preparing a solid ink composition, comprising the steps of:
reacting 15 - 25 parts by weight of base oil including coconut oil, palm oil and castor oil and 40 ∼ 60 parts by weight of aliphatic organic acid of 10 to 20 carbon atoms with 7 ∼ 15 parts by weight of a caustic soda solution (concentration: 40%) to saponify the base oil and to change the aliphatic organic acid into sodium salt thereof;
mixing 3 ∼ 10 by weight of glycerin, 10 ∼ 20 by weight of ethanol, 0.1 ∼ 1.0 by weight of a dye and 1 ∼ 10 by weight of silica with the reaction product and then melting the mixture at 70 ∼ 80°C; and
cooling the molten mixture.

2. The method of preparing a solid ink composition according to claim 1, wherein the ethanol has a purity of 95% or more.

3. The method of preparing a solid ink composition according to claim 1, further comprising the step of: adding 3 ∼ 10 parts by weight of sugar to the reaction product as a subsidiary clearing agent before the mixing and melting process.

4. The method of preparing a solid ink composition according to claim 1, wherein the dye is a water-soluble dye or a water-soluble fluorescent dye.

5. A solid ink composition, prepared by the method of claim 1, wherein the solid ink composition comprises a saponifying agent as a solid component.

## Patentansprüche

1. Verfahren zur Herstellung einer Festtintenzusammensetzung, welches die folgenden Schritte umfasst:
Reagieren von 15 - 25 Gew.-Teilen Basisöl, umfassend Kokosnussöl, Palmöl und Kastoröl, und 40 - 60 Gew.-Teilen aliphatischer organischer Säure aus 10 bis 20 Kohlenstoffatomen mit 7 - 15 Gew.-Teilen einer Natronlauge (Konzentration: 40 %) zum Verseifen des Basisöls und zum Umwandeln der aliphatischen organischen Säure in ein Natriumsalz derselben;
Mischen von 3 - 10 Gew.-Teilen Glycerin, 10 - 20 Gew.-Teilen Ethanol, 0,1 - 1,0 Gew.-Teilen eines Farbstoffs und 1 - 10 Gew.-Teilen Silica mit dem Reaktionsprodukt und anschließendes Schmelzen der Mischung bei 70 - 80 °C; und
Abkühlen der geschmolzenen Mischung.

2. Verfahren zur Herstellung einer Festtintenzusammensetzung nach Anspruch 1, wobei das Ethanol eine Reinheit von 95 % oder höher aufweist.

3. Verfahren zur Herstellung einer Festtintenzusammensetzung nach Anspruch 1, welches weiterhin den folgenden Schritt umfasst: Hinzufügen von 3 - 10 Gew.-Teilen Zucker als Klärhilfsmittel zu dem Reaktionsprodukt vor dem Misch- und Schmelzvorgang.

4. Verfahren zur Herstellung einer Festtintenzusammensetzung nach Anspruch 1, wobei der Farbstoff ein wasserlöslicher Farbstoff oder ein wasserlöslicher fluoreszierender Farbstoff ist.

5. Festtintenzusammensetzung, hergestellt gemäß dem Verfahren nach Anspruch 1, wobei die Festtintenzusammensetzung ein Verseifungsmittel als festen Bestandteil umfasst.

## Revendications

1. Procédé de préparation d'une composition d'encre solide, comprenant les étapes de :
réagir 15 - 25 parties en poids d'une huile de base, y compris l'huile de noix de coco, l'huile de palme et l'huile de ricin, et 40 - 60 parties en poids d'acide organique aliphatique en 10 à 20 atomes de carbone avec 7 - 15 parties en poids d'une solution de soude caustique (concentration : 40 %) afin de saponifier l'huile de base et transformer l'acide organique aliphatique en un sel de sodium de celui-ci ;
mélanger 3 - 10 parties en poids de glycérine, 10 - 20 parties en poids d'éthanol, 0,1 - 1,0 parties en poids d'un colorant et 1 - 10 parties en poids de silice avec le produit de la réaction et puis fondre le mélange à 70 - 80 °C ; et
refroidir le mélange fondu.

2. Procédé de préparation d'une composition d'encre solide selon la revendication 1, dans lequel l'éthanol a une pureté de 95% ou plus.

3. Procédé de préparation d'une composition d'encre solide selon la revendication 1, comprenant en outre l'étape de : ajouter 3 - 10 parties en poids de sucre au produit de la réaction comme agent clarifiant subsidiaire avant le processus de mélange et de fonte.

4. Procédé de préparation d'une composition d'encre solide selon la revendication 1, dans lequel le colorant est un colorant hydrosoluble ou un colorant fluorescent hydrosoluble.

5. Composition d'encre solide, préparée par le procédé selon la revendication 1, la composition d'encre solide comprenant un agent saponifiant comme composant solide.
